# EUROPEAN PATENT APPLICATION

(11) **EP 1 289 260 A2**
(43) Date of publication of application: **05.03.2003**
(21) Application number: 02019192.0
(22) Date of filing: 02.09.2002
(51) Int. Cl.: H04N 1/32

(54) **Facsimile apparatus and facsimile retransmission method**

(30) Priority: 03.09.2001 JP 2001265253
(71) Applicant: SHARP KABUSHIKI KAISHA, Osaka-shi, Osaka-fu 545-0013 (JP)
(72) Inventor: Maeda, Takahiro, Ikoma-shi, Nara (JP)
(74) Representative: Müller - Hoffmann & Partner

(57) **Abstract**

Documents to be transmitted, not-yet-transmitted documents and information about addressees of not-yet-transmitted documents are stored in a storage device (15). When a call was received, caller information from a network is also acquired by a caller information acquiring portion (11a). The caller information is compared with addressee information for respective not-yet-transmitted documents. If the addressee information is matched to the caller information, the not-yet-transmitted document is retransmitted automatically to the address specified by the caller information.

## Description

### BACKGROUND OF THE INVENTION

The present invention relates to a facsimile apparatus and a facsimile retransmission method and, more specifically, to a facsimile apparatus provided with a storing means for storing documents to be transmitted and a caller information acquiring means for acquiring information about a caller and a facsimile retransmission method. In particular, the present invention relates to a facsimile apparatus which is provided with a document management means for managing information about addressees of not-yet-transmitted and stored therein documents and which can execute automatic or manual retransmission or request the caller-addressee to receive the document addressed to the caller when a call is received from the addressee, and a facsimile retransmission method for realizing the above-mentioned unexecuted transmittal of the document by the facsimile apparatus.

Recently, there has been used many facsimile apparatuses capable of reading and storing image data in its memory and then transmitting the image data stored in the memory, and which can save thereby time necessary for reading an original and can, in case of the called line being occupied, repeat dialing the telephone number of the called addressee a plurality of times at a specified interval to execute automatic retransmission of the document to the addressee. Furthermore, many recent models of facsimile apparatuses have a function for acquiring caller information for identifying a calling party, which information is provided from the network together with a calling signal. Namely, the user of a facsimile apparatus with this function can identify the calling party in advance and can reject the call in such cases if the calling party is undesirable or of junk facsimile.

However, whenever the calling facsimile apparatus attempts retransmission of a document to a called facsimile terminal provided with automatic answering device but not provided with a function for detecting a call from a facsimile apparatus, the call is answered by a hook-off signal generated by the called terminal, establishing the chargeable telephone line connection through the network. The communication charge may be wasted if the called terminal could not receive the facsimile transmission. This may be a problem.
In this instance, the facsimile transmission can be realized when user occasionally attended near the called terminal became aware of the reception of facsimile transmission and caused the terminal to execute the procedure of receiving the facsimile transmission. Otherwise, the facsimile transmission attempt can not be realized. This is also a problem.

If the called party became aware later in time, by the record of received calls, of having been called many times by the same calling party, there is no means for the user to know the call was made for facsimile transmission. Therefore, s/he has to make a call back the caller to know the purpose of the call but may fail in confirming the purpose of the call in the absence of the concerned party at the time of call-back. This is another problem.

When the called party could know later by any method that a document addressed to the called terminal is left as not-yet-transmitted at the facsimile apparatus having called the called party, the called party usually transmits to the facsimile apparatus a call back signal requesting the retransmission of the document. However, this request for transmission of not-yet-transmitted document stored in the facsimile apparatus can not be fulfilled by the facsimile apparatus if the latter was unattended. This is also a problem.

### SUMMARY OF THE INVENTION

The object of the invention is to provide a facsimile apparatus operating using such a facsimile retransmission method that the facsimile apparatus provided with a storing means for storing documents to be transmitted, a caller information acquiring means for acquiring caller identifying information when receiving a call and a not-yet-transmitted document managing means for managing not-yet-transmitted documents and addressees of respective documents examines, every time at arrival of a call, whether there is a not-yet-transmitted document addressed to a caller whose information is transmitted from the network, and, if such document is stored, starts the procedure of retransmitting the document.

Namely, the present invention is directed to create an facsimile apparatus which is provided with any one or plural or all of technical means enabling the apparatus having received a telephone call from a person who is an addressee of a document not yet transmitted and stored therein to start a procedure for automatic retransmission of the not-yet-transmitted document to the addressee irrespective of periodical execution of the procedure or transmit to the calling party an message requesting the caller to receive the facsimile transmission or advise the user of the called facsimile apparatus of the existence of the not-yet-transmitted document addressed to the calling party or indicate an message requiring the user to do the manual transmission operation.

Another object of the present invention is to provide a facsimile apparatus having a storing means for storing documents to be transmitted, a caller-information acquiring means for acquiring caller information transmitted from the network at the time of receiving a call and a not-yet-transmitted document managing means for managing not-yet-transmitted documents and information about the addressees of the documents, which apparatus can compare the caller information acquired at the time of receiving a call with each of the addressees and, if a match is found among them, start the execution of a procedure for automatic retransmission of the document to the calling party identified as a addressee.

Another object of the present invention is to provide a facsimile apparatus having a storing means for storing documents to be transmitted, a caller-information acquiring means for acquiring caller information transmitted from the network at the time of receiving a call and a not-yet-transmitted document managing means for managing not-yet-transmitted documents and information about the addressees of the documents, which apparatus can collate the caller information acquired at the time of receiving a call and each of the addressees and, if a match is found between them, change an interval of starting the execution of a procedure for automatic retransmission of the document to the addressee identified by the caller information.

Another object of the present invention is to provide a facsimile apparatus having a storing means for storing documents to be transmitted, a caller-information acquiring means for acquiring caller information transmitted from the network at the time of receiving a call and a not-yet-transmitted document managing means for managing not-yet-transmitted documents and information about the addressees of the documents, which apparatus can collate the caller information acquired at the time of receiving a call and each of the addressees and, if a match is found between them, notify the called user that the call is made from a person who is an addressee of the not-yet-transmitted document.

Another object of the present invention is to provide a facsimile apparatus having a storing means for storing documents to be transmitted, a caller-information acquiring means for acquiring caller information transmitted from the network at the time of receiving a call and a not-yet-transmitted document managing means for managing not-yet-transmitted documents and information about the addressees of the documents, which apparatus can collate the caller information acquired at the time of receiving a call and each of the addressees and, if a match is found between them, notify the calling party by an message informing that the call made by the person who is also the addressee of the not-yet-transmitted document stored in the storing means.

Another object of the present invention is to provide a facsimile apparatus having a storing means for storing documents to be transmitted, a caller-information acquiring means for acquiring caller information transmitted from the network at the time of receiving a call and a not-yet-transmitted document managing means for managing not-yet-transmitted documents and information about the addressees of the documents, which apparatus can collate the caller information acquired at the time of receiving a call and each of the addressees and, if a match is found between them, present to the called party a guiding message regarding a manual operation procedure for manually transmitting the not-yet-transmitted document addressed to the calling party identified as the addressee of that document.

Another object of the present invention is to provide a facsimile apparatus having a storing means for storing documents to be transmitted, a caller-information acquiring means for acquiring caller information transmitted from the network at the time of receiving a call and a not-yet-transmitted document managing means for managing not-yet-transmitted documents and information about the addressees of the documents, which apparatus can collate the caller information acquired at the time of receiving a call and each of the addressees and, if a match is found between them, transmit to the calling party a selection guiding message for starting a procedure for automatically retransmitting the not-yet-transmitted document addressed to the calling party identified as the addressee of that document.

Another object of the present invention is to provide a facsimile apparatus having a storing means for storing documents to be transmitted, a caller-information acquiring means for acquiring caller information transmitted from the network at the time of receiving a call and a not-yet-transmitted document managing means for managing not-yet-transmitted documents and information about the addressees of the documents, which apparatus can collate the caller information acquired at the time of receiving a call and each of the addressees and, if a match is found between them, present to the calling party and/or the called party guiding information by a predetermined specific voice signal for controlling the retransmission of the not-yet-transmitted document addressed to the calling party identified as the addressee of that document.

Another object of the present invention is to provide a facsimile apparatus having a storing means for storing documents to be transmitted, a caller-information acquiring means for acquiring caller information transmitted from the network at the time of receiving a call and a not-yet-transmitted document managing means for managing not-yet-transmitted documents and information about the addressees of the documents, which apparatus can collate the caller information acquired at the time of receiving a call and each of the addressees and, if a match is found between them, start a retransmission procedure for retransmitting the not-yet-transmitted document to the calling party identified as an addressee of that document, when predetermined specific voice information detected by a voice-information monitoring means.

Another object of the present invention is to provide a facsimile apparatus which is defined in any one of the first to eighth objects and can start a procedure for automatic retransmitting a not-yet-transmitted document to addressee periodically at predetermined intervals.

Another object of the present invention is to provide a facsimile retransmission method for retransmitting a not-yet-transmitted facsimile document by a facsimile apparatus provided with a storage means for storing documents to be transmitted, an information acquiring means for acquiring caller information transmitted from a network when receiving a call and a not-yet-transmitted document managing means for managing not-yet-transmitted documents and information about addressees of said documents, whereby the caller information received at the time of receiving a call is compared with the addressee information of the not-yet-transmitted documents stored in the storage means and, if the caller is identified as one of the addressees, a procedure for automatically transmitting the not-yet-transmitted document addressed to the calling party is automatically started.

### BRIEF DESCRIPTION OF THE DRAWINGS

Fig. 1 is a block diagram showing the exemplified construction of a facsimile apparatus according to the present invention.
Fig. 2 is a flowchart depicting an exemplified operation procedure of a facsimile apparatus according to the present invention.
Fig. 3 is a continuation of the flowchart of Fig. 2 for depicting the remaining operation procedure of the same facsimile apparatus according to the present invention.
Fig. 4 is a continuation of the flowchart of Fig. 3 for depicting the remaining operation procedure of the same facsimile apparatus according to the present invention.
Fig. 5 shows an exemplary construction of a list of not-yet-transmitted documents.
Fig. 6 shows an exemplary table of various kinds of messages to be transmitted from a facsimile apparatus according to the present invention.

### PREFERRED EMBODIMENT OF THE INVENTION

A facsimile apparatus and a facsimile retransmission method according to a preferred aspect of the present invention will be described below with reference to the accompanying drawings.

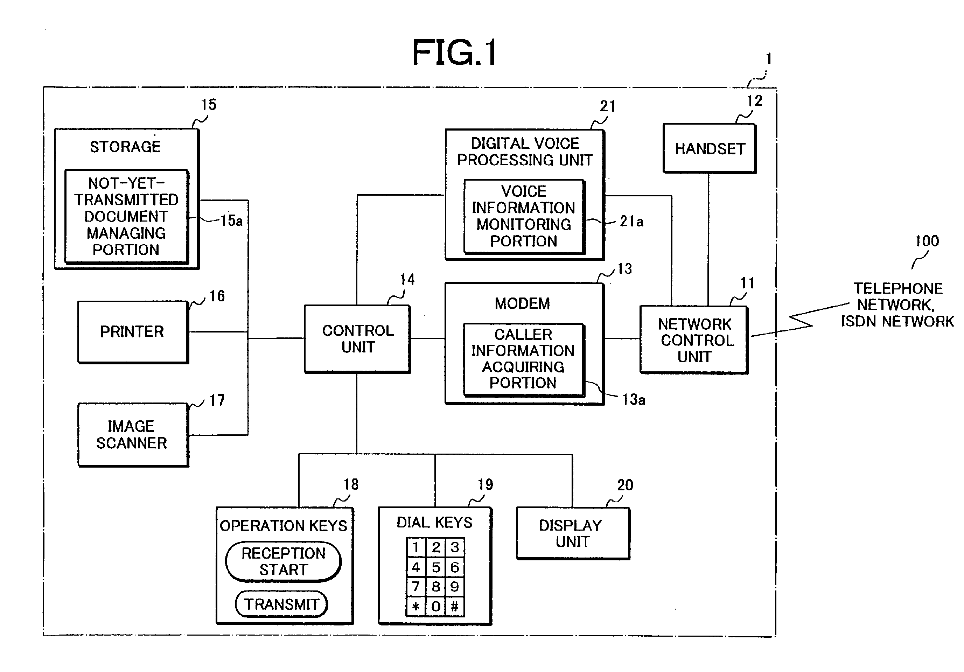

Figure 1 is a block diagram showing an exemplary construction of a facsimile apparatus according to the present invention. In Fig. 1, a facsimile apparatus 1 is connected through a network control unit 11 to a network 100 comprising various kinds of analog line networks and INDN line networks.

The network control unit 11 monitors the traffic of the network 100 and has a function for switching the communication line from a handset 12 to a modem 13 or reverse. The modem 13 can convert digital signals of image data into analog signals suitable for transmission over the network 100 and demodulates analog signals of image data received over the network 100 into original digital signals. It is provided with a caller information acquiring portion 13a for receiving caller information (i.e., a calling party's telephone number) transmitted together with a corresponding calling signal from the network 100 and storing it in a storage 15 under the control of the control unit 14.

A printer 16 is used to print image data transmitted from the network 100 or read by an image scanner 17 on a recording paper. It may be of thermal, electrographic or ink-jet printing type. The image scanner 17 has a function for reading an original image data and converts it into digital form so that it can be transmitted over the network 100 and copied on the printer 16. It may be using a combination of a lens with a CCD line sensor or of the contact sensor type using a self-focusing lens array.

A storage 15 is used for storing documents (i.e., image data) read by the image scanner 17 and documents (i.e., image data) received from the network 100. The provision of the storage 15 enables the control unit 14 to execute programs stored in the storage 15 for realizing a number of complex functions such as for example transferring a document (i.e., image data) and broadcasting the data. Furthermore, it is used for storing speech information by an automatic answering telephone set, specific vocal guidance for requesting a user to start the retransmission operation when having received a call and so on.

The storage 15 is provided with a not-yet-transmitted document managing portion 15a (technical means) for managing not-yet-transmitted documents and addressee information. Namely, this document managing portion 15a holds a list of not-yet-transmitted facsimile documents, information about addressees of the documents, and so on.

The control unit 14 executes programs (instructions) stored in the storage 15 and controls the operation of the facsimile apparatus 1 based on information inputted from operation keys 18 and dial keys 19, information from components of the facsimile apparatus 1 or various kinds of signals received from the network 100 by sending commands to the respective components and causing a display unit 20 to indicate the necessary messages. By executing programs stored in storage 15, the control unit 14 causes the facsimile apparatus 1 to transmit/receive image data (document information) and retransmit it or compress image data to save the time of transmission or expand a compressed image signal to an original image data.

The operation keys 18 and dial keys 19 are devices for the user to input information and instruction into the facsimile apparatus 1. A display unit 20 is used to indicate various kinds of information and guidance for the user from the facsimile apparatus 1.

The control unit 14 reads out various kinds of digital voice data stored in the storage 15 and causes a digital voice processing unit 21 to convert the data into voice information. When a call has arrived from a person who is a addressee of a not-yet-transmitted document stored in the apparatus, a converted voice information (message) can be transmitted through the network control unit 11 to the calling terminal over the network 100 to inform the calling party of the existence of the document and guide how to receive the document. The apparatus 1 can also give the user (called party) a suitable voice message.

Furthermore, the digital voice processing unit 21 has the voice recognition ability and can monitor the output of a plurality of predetermined specific voice information forming the above-mentioned guidance regarding the facsimile retransmission procedure. It can detect the output of any of the predetermined specific voice messages, recognize its content and output a detection signal. Namely, the digital voice processing unit 21 includes a voice information monitoring portion 21a for monitoring and detecting predetermined specific voice messages. The detection signal outputted by this portion 21a can be used as a driving signal for starting the procedure for automatic retransmission of a not-yet-transmitted document.

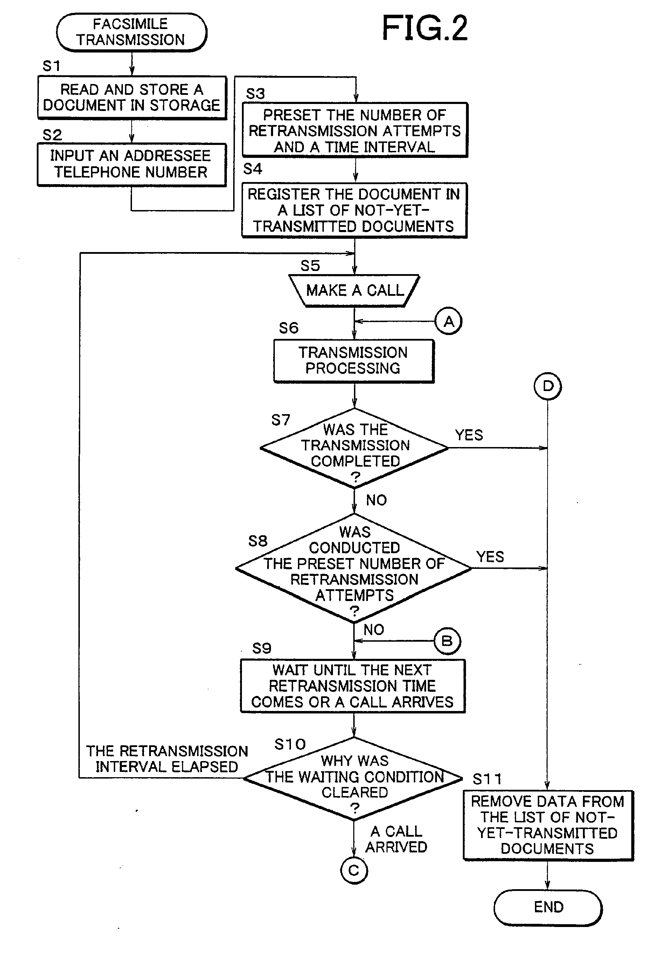

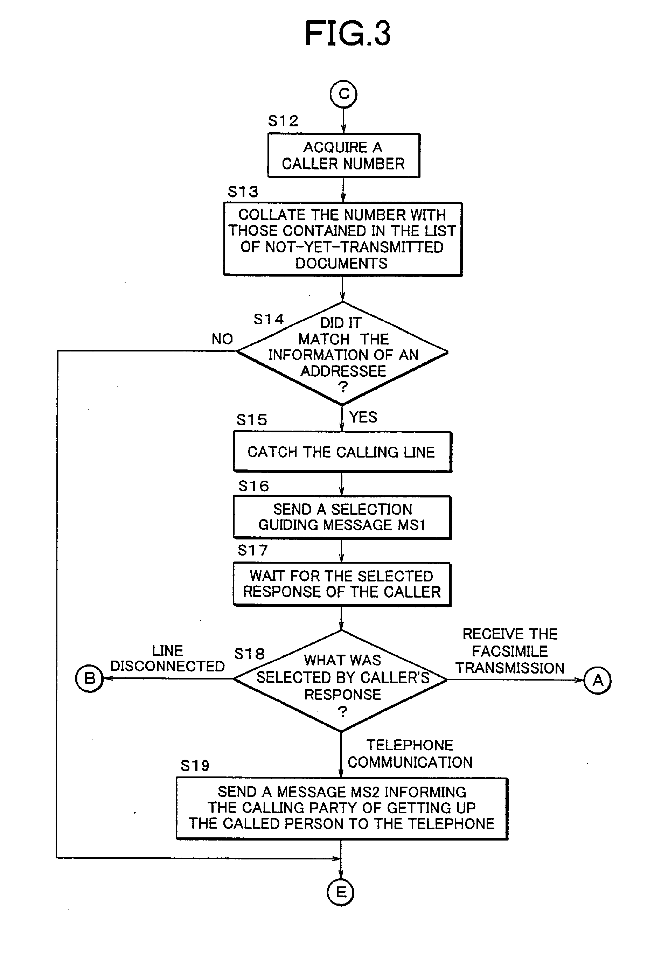

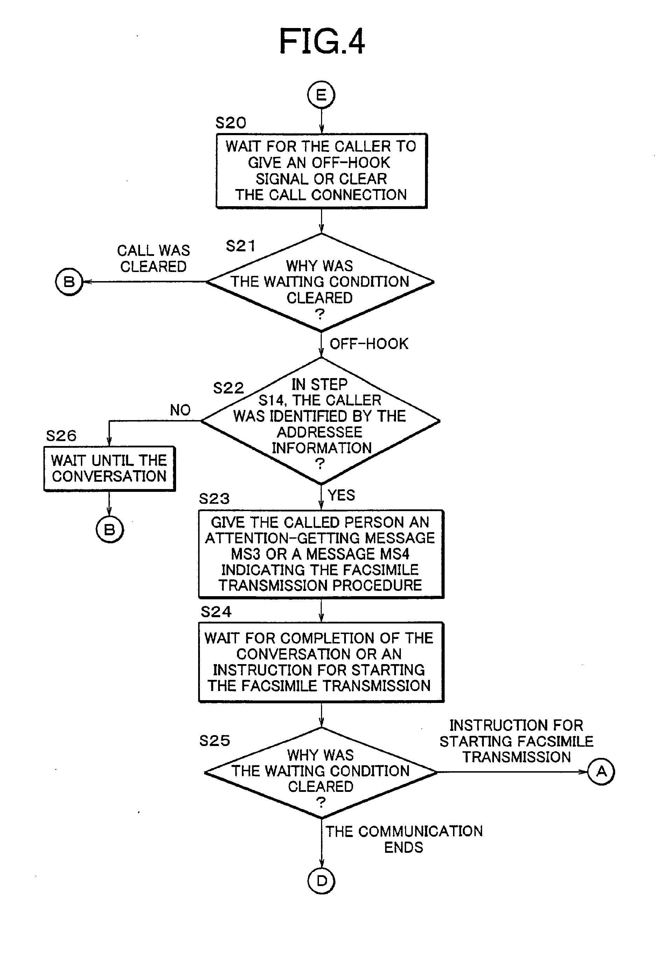

The operation of the facsimile apparatus 1 shown in Fig. 1 will be described below according to flowcharts of Fig. 2 to 4. Figure 2 is a flowchart describing an exemplary operation procedure of the facsimile apparatus according to the present invention. Figure 3 shows a continuation of the flowchart of Fig. 2, and Figure 4 shows a continuation of the flowchart of Fig. 3.

In Fig. 2, an original document to be facsimiled is read by the image scanner 17 and stored into the storage 15 (Step S1). A telephone number of a person who is an addressee of the document is then inputted by using the dial keys 19 (Step S2). In preparation for retransmission of the document when the called line is busy not to receive the call, the maximum number of retransmission attempts (by redialing) and an interval between two attempts are preset as the number of attempts and intervals by using the operation keys 18 (Step S3). Furthermore , addressee information (telephone number of the addressee of the document) and an ID for identifying the document stored in the storage are registered in a list of not-yet-transmitted documents, which is provided in a not-yet-transmitted document managing portion 15a of the storage 15 (Step S4).

To transmit to the addressee the document stored in the storage 15, the control unit 14 via the network control unit 11 acquires a telephone line and causes the facsimile apparatus to execute the transmission processing for sending dial information (dial tone) to the network 100 (Step S5).

Once a communication line to the called terminal was set by doing the transmission processing in Step S5, a facsimile transmission procedure begins with sending a calling tone signal CNG corresponding to a calling signal.

After the communication line set for facsimile transmission of the document to the addressee (called terminal) was released, it is confirmed whether the facsimile transmission was correctly accomplished or not (Step S7). Namely, it is decided whether the transmission can be finished or shall be conducted again. If it is the judgment that the facsimile transmission was correctly conducted and completed (positively answered at Step S7), the information (addressee information and document ID) registered in advance (in Step S11) in the list of not-yet-transmitted documents is cleared and the facsimile transmission operation is finished.

If the facsimile transmission was decided as uncompleted and retransmission of the document shall be conducted again (negatively answered at Step S7), the control unit updates the count of a retransmission counter for counting the number of retransmission operations and compares the count with the preset number of counts (i.e., the upper limit of retransmission operations attempted) to decide whether to continue or finish the retransmission (Step S8).

With the current count having reached the preset number of attempts (Positively answered in Step S8), the control unit considers that the facsimile transmission can not be accomplished for a certain reason at the called terminal because the preset number of attempts failed in transmission of the document to the called terminal and, therefore, finishes the retransmission operation by previously clearing the information (the addressee information and document ID) registered in the list of not-yet-transmitted document (Step S11).

If the count is less than the preset value (negatively answered in Step S8), the control unit causes the apparatus to wait for a given time interval to the next retransmission. With a call occasionally arrived or an elapse of the time interval, the waiting condition is canceled and the next retransmission operation is started (Step S9).

A check is made for whether the cancellation of the waiting state was caused by the elapse of the given time or the arrival of a call from the Network 100 to the facsimile apparatus 1 (Step S10). With the elapse of a time interval given by the preset frequency of retransmission (the time elapsed in Step S10), the procedure returns to Step S5 to drive network 100 again, acquire the line and begins the facsimile transmission operation with sending the input telephone number as dialing information to the network 100. Namely, the automatic retransmission procedure is started with dialing the telephone number again in Step S3.

The retransmission procedure to be executed when the call arrived at the facsimile (Call was received in Step S10) will be described according to the flowchart shown in Fig. 3. This is a chance to execute the transmission of a document if the calling party is a person to whom an existing not-yet-transmitted document is addressed.

In the case of "the arrival of the call" in Step S10, the transmission of the not-yet-transmitted document to the calling party can be started immediately without sending the dial information for line connection since the line connection has been established from the calling party. This case differs in this point from the procedure to be executed with an elapse of a given time interval from the preceding attempt.

Namely, the control unit in this case returns to Step S6 to start the retransmission procedure, not to Step S5 starting with sending the dial information. In other words, the control unit causes the facsimile apparatus to execute the procedure of automatic facsimile retransmission of a not-yet-transmitted document without automatic redialing operation, which differs from the procedure with automatic dialing to be executed after the elapse of the time interval in Step S10.

Furthermore, the procedure of the particular case of Step S10 is started by a call randomly occurring, by which it is distinct from the retransmission procedure to be repeated periodically at a predetermined interval. In other words, this retransmission procedure is driven by changing the preset interval to the random occurrence of a call to the facsimile apparatus.

According to the flowchart of Fig. 3, the next facsimile transmission driven by detection signal of the arrival of a call from a remote communication terminal at the facsimile apparatus 1 (with a call received in Step S10) starts with acquiring the caller telephone number (caller identifying information) transmitted together with the calling signal from the network 100 (Step S12).

Based on the caller identifying information received from the network 100, the control unit examines the content of the not-yet-transmitted document list held in the not-yet-transmitted document managing portion 15a of the storage 15 (Step S13) and collates the caller identifying information and the addressee information stored in the list of the not-yet--transmitted documents (Step S14).

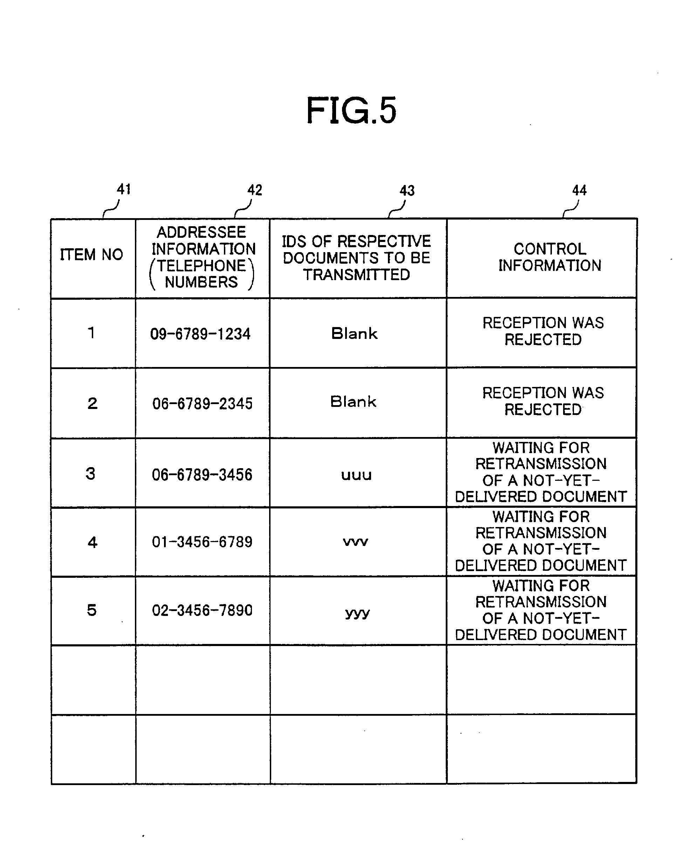

Referring now to Fig. 5, an exemplary construction of the list of not-yet-transmitted document. The list contains, under each item number 41, records of addressee information 42, an ID 43 of a document to be transmitted and control information 44. The addressee information 42 is a telephone number of a certain addressee to whom a document shall be transmitted and the ID information 43 is an identifier given to a certain document, by which a certain document addressed to a certain addressee is retrieved from the storage 15.

The control information 44 is control information indicating a "not-yet-transmitted" state of a certain document with an state description such as for example "Rejected" to indicate that the remote terminal of the addressee has rejected the reception of the facsimile transmission of the document for any reason thereat and the document cannot be facsimiled thereto. In this case, the ID 43 of the document contains a "blank" to indicate the absence of the document to be transmittable.

When the control information 44 has a description "waiting for retransmission of the not-yet-delivered document" indicating that the facsimile apparatus could not execute the facsimile transmission for some reason after the information necessary for transmission of the document was registered and brought itself into the state waiting until the next retransmission time comes. In an example of the list of Fig. 5, there are five items registered for facsimile transmission, two items (documents) are in the state "rejected" by the addressees and three items are in the state "waiting for the time to retransmit the not-yet-transmitted document".

In Step S14 (Fig.3), when it was judged that a certain addressee registered in the addressee information 42 of the not-yet-delivered document corresponds to the caller information received from the network (Positively answered in Step S14), a not-yet-transmitted document addressed to the caller identified as the addressee is retrieved by the document identifier ID 43 from the storage 15 and read out from there and the procedure for automatic retransmission of the document to the caller is then started.

In this particular case, the procedure for automatic retransmission of the not-yet-transmitted document is started by using a chance of the occasionally arrived call from the person who is an addressee of the not-yet-delivered document. Therefore, the procedure is driven at a certain time changed from the time designated by a preset interval at which the regular procedure of automatic retransmission of the document is periodically started with automatic dialing of the addressee's telephone number. In other words, it is possible to start the procedure for retransmitting a not-yet-transmitted document by using a call from the person identified as a certain addressee of that document, which call arrived occasionally earlier than the next time of regular periodical retransmission of the document. The call from the person to who is an addressee of a not-yet-transmitted document may happen at a random frequency that is quite different from the periodicity of the regular retransmission transmission.

When it was decided that any one of the addressees corresponds to the caller information (positively answered in Step S14), the control unit 14 through the network control unit 11 automatically catches the transmission line for further transmitting a particular voice guiding message as a voice information to the calling party identified by the caller information received together with the calling signal (Step S15), sends a selection guiding message MS1 to the calling party (Step S16) and waits for the selection response from the calling party (Step S17).

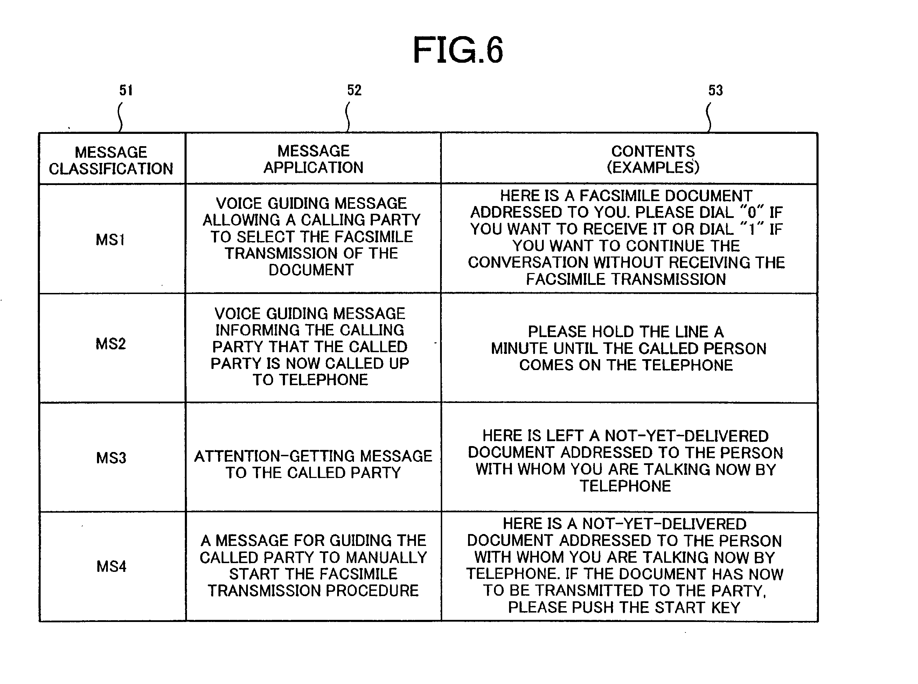

Referring now to Fig. 6, the selection guiding message MS1 is further described below. In Fig. 6, there is shown a table of exemplified messages to be transmitted from the facsimile apparatus 1 according to the present invention. The message table shown in Fig. 6 is stored in the storage 15. In the table, there are shown message classification 51, message application 52 describing the use or purpose of each classified message and contents 53 of the predetermined specific voice or character messages defined by the message classification 51. The selection guiding message MS1 is voice information guiding the calling party in selecting the operation regarding the facsimile transmission of the document addressed to the calling party. Since the facsimile terminal at the calling side is in the operating state allowing the voice communication at the time of sensing the voice message MS1 from the called facsimile apparatus, the voice message MS1 can be sent immediately to the calling party over the voice communication line established between both parties through the network 100.

The selection guiding messages MS1 is used for informing the calling party of the existence of a not-yet-transmitted document addressed to the caller and requesting her/him to switch over the calling terminal into facsimile receiving mode and to drive the apparatus at the called party side to execute the automatic facsimile transmission procedure. The message MS2 is used for informing the calling party that the called party is now called up to telephone. These messages are converted by the voice processing unit 21 (Fig. 1) into analog signals of voice information and then transmitted as predetermined specific voice information to the calling party over the network 100.

On the other hand, a message MS3 shown in the classification 51 (Fig. 6) is used for advising the called party (the user of the facsimile apparatus 1) of the existence of a not-yet-transmitted document to be sent to the calling party with whom s/he is now talking. In other words, the message MS3 is so called "attentional message" for informing the user that the calling party is an addressee of a not-yet-transmitted document stored therein. A message MS4 is also used for advising the called party (the user of the facsimile apparatus 1) of the manual operation for transmitting the not-yet-transmitted document to the calling party with whom s/he is talking. These messages are presented as visual information on the display unit 20 (Fig. 1).

It is also possible to present to the user the above messages MS3 and MS4 as predetermined specific voice information which can be generated by the voice processing unit 21 (Fig. 1) in the same way as the messages MS1 and MS2 is generated to be transmitted to the calling party at a remote facsimile terminal to which the document is to be facsimiled.

As described before, the digital voice processing unit 21 (Fig. 1) not only generates such predetermined specific voice information but also monitor the reception of predetermined specific voice information among signals received from the network 100, identifies the classification of the detected specific voice information and automatically outputs a detection signal of the specific voice information. The use of this voice recognition facility of the voice processing unit enables the facsimile apparatus to automatically start the procedure for facsimile transmission of the not-yet-transmitted document to the calling party when the specific sound signal returned from the calling party in response to the specific voice message MS1 (Step S16) was received and detected by the digital voice processing unit 21 of the facsimile apparatus 1.

The selection guiding information MS1 contains predetermined specific voice information, for example, "Here is a facsimile document addressed to you. Please dial "0" if you want to receive it or dial "1" if you want to continue the conversation without receiving the facsimile transmission". This message can be transmitted by voice to the calling party. Thus, the calling party is advised of the existence of the document to be facsimiled to his/her address and requested to select which way to receive the document by switching over the own facsimile apparatus into the facsimile receiving mode or to conduct the conversation with the called party without switching over the apparatus into the facsimile receiving mode. This selection guiding message MS1 may cause the calling party to receive the facsimile document and require the calling party to return a selecting response to the facsimile apparatus 1 at the called party side. Of course, the calling party may put down the handset to release calling line.

When the calling party did not return a selecting response while waiting for the response there from (in Step S17 of Fig. 3) and disconnected the call line (Line Disconnected in Step S18), the control unit causes the facsimile apparatus to be released from the state waiting for the selecting response from the calling party and, then, it returns the procedure to Step S9 where it causes the facsimile apparatus 1 to wait again for the elapse of a regular time interval to the next retransmission trial or for the arrival of a call that may happen to arrive during the waiting period.

When the selecting response from the calling party was returned to the facsimile apparatus 1 of the called party (in Step S17), the control unit of the facsimile apparatus 1 recognizes the selection result of the response (Step S18). When the dialed number "0" was detected as a TDMF signal and the response of the calling party indicates that the calling side apparatus was turned to the facsimile receiving mode (Receive the facsimile transmission in Step S18), the control unit returns the procedure to Step S6 whereat the facsimile transmission procedure starts with sending a calling tone signal CNG corresponding to calling signal.

In the shown embodiment, a selection response is made by using a DTMF signal to select the reception of the facsimile transmission of the document. However, it is also possible to use a selection response signal according to the facsimile transmission control procedure.

For example, when a tonal signal method being a simple transmission control procedure using a single frequency tone is applied to a facsimile transmission control procedure, a called station identification signal CED corresponding to a response signal is used as a selection response signal that is transmitted from the calling party in response to a calling tone signal CNG corresponding to a calling signal. In this case, since the calling tone signal CNG and the response signal CED have been already exchanged, the control procedure returns to Step S6 (Fig. 2) and immediately proceed to the next facsimile transmission control procedure, i.e., the detection of group identification signal GI.

When the response from the calling party indicated the selection of the dial number "1" that was detected in Step S18 for example in the DTMF signal (response signal) and the conversation mode was selected by the calling party side without turning to the facsimile reception mode ("Telephone communication" selected in Step S18), the called line to the facsimile apparatus 1 is turned from the facsimile transmission mode to the conversation mode in which an audible calling signal is transmitted to the facsimile apparatus 1 to inform the called party of the arrival of a telephone call from the calling party and a message MS2 is returned from the facsimile apparatus 1 of the called party to the calling party facsimile terminal to inform the calling party that the called party will soon come on the telephone(Step S19).

As described in the message application column 51 of the Message Table of Fig. 6, the message MS2 is a voice guiding signal for informing the calling party of getting the called person to the telephone. Since the facsimile terminal of the calling party has been set to the telephone conversation mode, the message MS2 can be transmitted as voice information to the calling party over the network 100. The message MS2 is the predetermined specific voice information which is described in the message table content 53 of Fig. 6 as an exemplary speech of "Please hold the line a minute unit the called person comes on the telephone. " Namely, this voice message is output through the caller's terminal to inform the calling party that the called person who is the user of the facsimile apparatus 1 is now called up to the telephone.

In the case when the preparation for transferring the operation from facsimile transmission state to the telephone conversation state was completed by sending a ringing signal informing of the arrival of a telephone call from the calling party to the called party who is the user of the facsimile apparatus 1 and by sending the calling-up indicating message MS2 to the calling party (Step S19), or in the case if it was determined no addressee information did match the caller information received from the Network 100 together with a call signal (negatively answered in Step S14), the facsimile transmission control waits for a period from the moment the call is answered by the called party by hooking-up a handset 12 of the facsimile apparatus 1 to the moment the called party is transferred into the conversation mode or to the moment the call is cleared by the calling party by disconnecting the communication line (Step S20).

In the case if the fact that the calling party finished the calling action by disconnecting the communication line was detected at the called party side in the waiting state (The call is cleared in Step S21), the line of the facsimile apparatus 1 of the called party is released to clear calling-up state and the facsimile retransmission control procedure returns to Step S9 wherein it waits until is the next periodical retransmission of the document or for another call arrives.

On the other hand, when a called terminal answer signal generated by hooking off the handset 12 of the facsimile apparatus 1 to respond a call is detected in the waiting state (in the case an off-hook signal was detected in Step S21), the answering action is examined again whether this action was made for the call from the calling party whose information received at the time of arrival of the call has matched one of the addressee information (Step S22). If no addressee information matched the caller information (Negatively answered in Step S22), the current calling party does not corresponds any one of addresses of the not-yet-transmitted documents stored in the storage 15 and, therefore, the facsimile transmission control only waits for the completion of the conversation by telephone. In this situation, the facsimile transmission of documents registered in the not-yet-transmitted document list provided in the not-yet-transmitted document managing portion 15a of the storage 15 could not be accepted even if such an attempt was made by the user of the facsimile apparatus 1 (Step S26).

On the other hand, in the case if there is the addressee information matching the caller information received together with the call (Positively answered in Step S22), the called party who is the user of the facsimile apparatus 1 is visually informed of the existence of an not-yet-transmitted document to be facsimiled to the calling party who is identified by the caller information or s/he is guided to manually starting the facsimile retransmission of the concerned document.
Namely, the called party who is the user of the facsimile apparatus 1 may be advised of the calling party identified as an addressee of a document registered in the not-yet-transmitted document list (by the attentional message) or guided to manually starting the facsimile transmission of the concerned document (by the manual transmission guiding message). This displaying action is predetermined and set in advance (Step S23).

In the case of presenting the attentional message informing of the calling party identified as an addressee of an not-yet-delivered document registered in the not-yet-transmitted document list is presented to the user, the message MS3 is displayed on the display unit 20. The user can watch the message when lighting the handset of the facsimile apparatus 1. Namely, the attentional message MS3, as described in the message application 52 of the table of Fig. 6, is intended to advise the user of the existence of the not-yet-delivered document to be facsimiled to the calling party to whom the user is speaking by telephone. The message MS3 is predetermined specific character information such as for example "Here is left a not-yet-transmitted document addressed to the person with whom you are talking now by telephone" (see "Content" 53 in the table of Fig. 6).

In the case of presenting the manual transmission guiding message enabling the user to manually start the facsimile transmission of the not-yet-delivered document, the message MS4 described in the table of Fig. 6 is used and displayed on the display unit 20. The user can read the message when lifting the handset of the facsimile apparatus 1. As noted in message application 52 of the table of Fig. 6, this message is intended to inform the user (called party) of the manual operation procedure for starting the facsimile transmission of the not-yet-delivered document to the calling party with whom s/he is now talking by telephone, thus promoting the transmission of the not-yet-delivered document.
An example of the message is as follows:
"Here is a not-yet-delivered document addressed to the person with whom you are talking now by telephone. If the document has now be transmitted to the party, please push the START key" (See Content 53 of the table of Fig. 6) The content is displayed to the User.

Having read either the message MS3 or MS4, the user (called party) of the facsimile apparatus 1 may ask the calling party at the beginning of conversation to receive the facsimile transmission of the document addressed to the calling party or inform the calling party of starting the facsimile transmission of the same document by manually operating the facsimile apparatus 1 at the called party side. The facsimile transmission control waits until the telephone conversation is finished or the facsimile transmission procedure is started by the user's manual operation with the facsimile apparatus 1 (Step S24).

If the telephone conversation was finished by the calling party and such was detected during the waiting period (the communication ends in Step S25), the facsimile transmission control decides that the calling party intentionally rejected the reception of facsimile transmission of the not-yet-delivered document addressed to the calling party, ignoring the chance of receiving the document and the suggestion made by the called party. The facsimile transmission control returns to Step S11 (Fig. 2) whereat the control deletes the information (addressee information, document ID) previously registered in the list of not-yet-transmitted documents and then finishes the facsimile transmission procedure for that document (Step S11).

When an instruction made by the user of the facsimile apparatus to start the facsimile transmission (e.g., pushing the start key as advised in the manual transmission guiding message MS4) was detected in the waiting period (the instruction for starting facsimile transmission in Step S25), the facsimile transmission control returns the procedure to Step S6 (Fig. 2) and starts the facsimile transmission procedure beginning with sending calling tone CNG corresponding to a calling signal.

Although in the described embodiment, the attentional message MS3 for advising the user of the existence of a not-yet-delivered document and the manual transmission guiding message MS4 for guiding the user to manually start the facsimile transmission are displayed as predetermined specific character information on the display unit 20 (Step S23), they are not restricted the above and may be presented in other ways:

For example, the attentional message MS3 or the manual transmission guiding message MS4 may be presented as voice information to the user. Namely, the messages MS3 and MS4 may be generated as voice messages by the digital voice processing unit 21 (Fig. 1), transmitted through the network control unit 11 to the handset 12 through which the user can listen to the voice information.

The connection circuit for the user (called party) to receive voice information from the digital voice processing unit 21 may be any of the following types: the digital voice processing unit 21 is connected to a speech path line between the calling party and the called party; or the calling party and the called party are connected to each other by two speech path lines and the digital voice processing unit 21 is connected to respective lines with its different output terminals. In the latter case, voice information of the above-described messages are transmitted to the called party and announce information (indicating sending the above-described messages to the called party) is output to the calling party over the speech line thereto.

As apparent from the foregoing detailed description, according to the present invention, it is possible to identify the caller by caller information received together with a calling signal transmitted from the network and, if a not-yet-transmitted document addressed to the caller is stored in the storage, start the automatic retransmission procedure for delivering the concerned document by using the chance, thereby preventing the occurrence of wasted communication charge for periodically retransmitting the document and surely achieving the facsimile transmission of the document to the calling facsimile apparatus attended by the addressee.

According to the present invention, it is also possible to inform the calling party of the existence of a not-yet-delivered document addressed to the calling party and/or send guide information for switching to reception of facsimile transmission, and advise the called party (i.e., the user of the facsimile apparatus having received the call from the calling party) before conducting the conversation with the calling party that there is a not-yet-delivered document addressed to the calling party. This enables the user of the facsimile apparatus to request the calling party to receive the document and/or guide the user of the facsimile apparatus to manually starting the facsimile transmission of the not-yet-delivered document to the calling party by interrupting the telephone conversation. All these facilities can increase a chance to retransmit not-yet-delivered documents and thereby considerably reduce the possibility of failing in transmitting by facsimile the documents.

## Claims

1. A facsimile apparatus provided with a storage means (15) for storing documents to be transmitted, a caller information acquiring means (13a) for acquiring caller information transmitted from a network when receiving a call and a not-yet-transmitted document managing means (15a) for managing not-yet-transmitted documents and information about addressees of said documents, whereby the caller information received at the time of receiving a call is compared with the addressee information of not-yet-transmitted documents stored therein and, if there is the addressee information matching the caller information, a procedure of retransmitting the concerned not-yet-transmitted document addressed to the caller is automatically started to facsimile the document thereto.

2. A facsimile apparatus provided with a storage means (15) for storing documents to be transmitted, a caller information acquiring means (13a) for acquiring caller information transmitted from a network when receiving a call and a not-yet-transmitted document managing means (15a) for managing not-yet-transmitted documents and information about addressees of said documents, whereby the caller information received at the time of receiving a call is compared with the addressee information of not-yet-transmitted documents stored therein and, if there is the addressee information matching the caller information, a time interval of starting the procedure of retransmitting the concerned not-yet-transmitted document addressed to the caller is changed.

3. A facsimile apparatus provided with a storage means (15) for storing documents to be transmitted, a caller information acquiring means (13a) for acquiring caller information transmitted from a network when receiving a call and a not-yet-transmitted document managing means (15a) for managing not-yet-transmitted documents and information about addressees of said documents, whereby the caller information received at the time of receiving a call is compared with the addressee information of not-yet-transmitted documents stored therein and, if there is the addressee information matching the caller information, a user of the called facsimile apparatus is given a message indicating that the call is transmitted from a person who is an addressee of the existing not-yet-transmitted document.

4. A facsimile apparatus provided with a storage means (15) for storing documents to be transmitted, a caller information acquiring means (13a) for acquiring caller information transmitted from a network when receiving a call and a not-yet-transmitted document managing means (15a) for managing not-yet-transmitted documents and information about addressees of said documents, whereby the caller information received at the time of receiving a call is compared with the addressee information of not-yet-transmitted documents stored therein and, if there is the addressee information matching the caller information, a message for advising the caller of the existence of a not-yet-transmitted facsimile document addressed to the caller is transmitted to the calling party.

5. A facsimile apparatus provided with a storage means (15) for storing documents to be transmitted, a caller information acquiring means (13a) for acquiring caller information transmitted from a network when receiving a call and a not-yet-transmitted document managing means (15a) for managing not-yet-transmitted documents and information about addressees of said documents, whereby the caller information received at the time of receiving a call is compared with the addressee information of not-yet-transmitted documents stored therein and, if there is the addressee information matching the caller information, the called apparatus user is given a guide message for indicating a procedure of manually transmitting the concerned not-yet-transmitted document addressed to the caller.

6. A facsimile apparatus provided with a storage means (15) for storing documents to be transmitted, a caller information acquiring means (13a) for acquiring caller information transmitted from a network when receiving a call and a not-yet-transmitted document managing means (15a) for managing not-yet-transmitted documents and information about addressees of said documents, whereby the caller information received at the time of receiving a call is compared with the addressee information of the not-yet-transmitted documents stored therein and, if there is the addressee information matching the caller information, a selection guiding message for starting a procedure for automatically retransmitting the concerned not-yet-transmitted document to the caller is transmitted to the calling party.

7. A facsimile apparatus provided with a storage means (15) for storing documents to be transmitted, a caller information acquiring means (13a) for acquiring caller information transmitted from a network when receiving a call and a not-yet-transmitted document managing means (15a) for managing not-yet-transmitted documents and information about addressees of said documents, whereby the caller information received at the time of receiving a call is compared with the addressee information of not-yet-transmitted documents stored therein and, if there is the addressee information matching the caller information, guiding information for controlling retransmission of the concerned not-yet-transmitted document addressed to the identified addressee is given in the form of predetermined specific voice information to the calling party and/or the called party.

8. A facsimile apparatus provided with a storage means (15) for storing documents to be transmitted, a caller information acquiring means (13a) for acquiring caller information transmitted from a network when receiving a call and a not-yet-transmitted document managing means (15a) for managing not-yet-transmitted documents and information about addressees of said documents, whereby the caller information received at the time of receiving a call is compared with the addressee information of not-yet-transmitted documents stored therein and, if there is the addressee information matching the caller information, a procedure for retransmitting the concerned not-yet-transmitted document addressed to the caller is started when predetermined specific voice information detected by a voice-information monitoring means (21a).

9. A facsimile apparatus as defined in any one of claims 1 to 8, **characterized in that** the procedure for automatically retransmitting a not-yet-transmitted document is started periodically at a predetermined retransmission frequency.

10. A facsimile retransmission method for retransmitting a not-yet-transmitted facsimile document by a facsimile apparatus provided with a storage means (15) for storing documents to be transmitted, a caller information acquiring means (13a) for acquiring caller information transmitted from a network when receiving a call and a not-yet-transmitted document managing means (15a) for managing not-yet-transmitted documents and information about addressees of said documents, whereby the caller information received at the time of receiving a call is compared with the addressee information of the not-yet-transmitted documents and, if there is the addressee information matching the caller information, a procedure for automatically retransmitting the not-yet-transmitted document addressed to the calling party is started.
